# EUROPEAN PATENT SPECIFICATION

(11) **EP 2 827 321 B1**
(45) Date of publication and mention of the grant of the patent: **13.09.2017**
(21) Application number: 13004819.2
(22) Date of filing: 07.10.2013
(51) Int. Cl.: G09B 9/04, G09B 9/05, G09B 9/052

(54) **Driving simulator apparatus and method of driver rehabilitation training using the same**
Fahrsimulator-Vorrichtung und Verfahren eines Fahrerrehabilitationstrainings damit
Appareil simulateur d'entraînement et procédé de formation de rééducation de commande l'utilisant

(30) Priority: 18.07.2013 KR 20130084870
(43) Date of publication of application: 21.01.2015
(73) Proprietor: Daegu Gyeongbuk Institute of Science and Technology, Daegu 711-873 (KR)
(72) Inventor: Son, Joon Woo, Daegu 706-759 (KR); Park, Myoung Ouk, Daegu 701-705 (KR); Shin, Hwa Kyung, Gyeongsan, Gyeongsangbuk-do 712-780 (KR); Lee, Woo Taik, Gimhae-si, Gyeongsangnam-do 621-761 (KR)
(74) Representative: Roos, Peter

(56) References cited:
- EP-A1- 0 773 526
- GB-A- 2 496 058
- KR-A- 20130 053 574
- US-A- 3 916 534
- US-A- 5 803 202

## Description

### RELATED APPLICATIONS

This application claims the benefit of Korean Patent Application No. 10-2013-0084870, filed on July 18, 2013, in the Korean Intellectual Property Office.

### BACKGROUND

### 1. Field

The present invention relates to a driving simulator apparatus according to the preamble of claim 1 and a driver rehabilitation training method according to the preamble of claim 5, and more particularly, to a driving simulator apparatus for drivers whose driving capability has degraded due to aging or brain lesions and a driver rehabilitation training method by using the apparatus.

### 2. Description of the Related Art

A typical driving simulator apparatus helps improve vehicle manipulation capability by allowing a driver to repeat driving practice safely under a virtual road environment. However, if a driver with physical or cognitive handicap have training by using this typical driving simulator apparatus, it is difficult to concentrate on a training method for improving a relatively weak function of the driver. For example, a driver with degraded upper limb movement ability due to stroke may have difficulty in precisely controlling a steering wheel. For such a driver, training should be focused on upper limb manipulation to improve visual-motor coordination before starting a driving practice by using a simulator.

It is an object of the present invention to provide a driving simulator apparatus to which a driving rehabilitation function is added, so as to provide a driving simulator apparatus with which physical and cognitive training are possible in addition to driving practice, and to provide a driver rehabilitation method by using the apparatus.

The background technique for the present invention is disclosed in KR 10-2013-0053574 (published on May 24, 2013). It discloses an apparatus to check driving ability or condition of a driver, using a selected mode from among a traffic lane change mode, a traffic lane change mode, and a scenario perform mode. These different modes concern the scenario of the driving simulation.

EP 0 773 526 A1 and US 5,803,202 disclose a device for controlling an application of torques to a steering column in a driving simulator apparatus. The respective torque is applied for providing a more "realistic" behaviour of the steering wheel.

### SUMMARY

One or more embodiments of the present invention include a driving simulator apparatus having a rehabilitation function for driving rehabilitation of a user with a degraded driving capability due to the aging or brain lesions or the like, and a driver rehabilitation training method by using the apparatus, thereby improving visual-motor coordination of the user.

Additional aspects will be set forth in part in the description which follows and, in part, will be apparent from the description, or may be learned by practice of the presented embodiments.

According to an aspect of the present invention, the above mentioned object is solved by a driving simulator apparatus for driving rehabilitation training according to the features of claim 1.

The control unit may generate an operating waveform that represents a variation in an operation of the steering wheel according to time, and compare and display the waveform of operation with a preset target waveform by using the display unit.

The control unit may generate an acceleration pedal waveform representing a variation in a degree that an acceleration pedal is pressed according to time, and compare and display the waveform of acceleration pedal with a preset target waveform by using the display unit.

The control unit may generate at least one of a visual, auditory, and tactile event displayed on the simulation driving screen to measure a brake operation reaction speed of the user.

According to another aspect of the present invention, the above mentioned object is solved by a driver rehabilitation training method according to the features of claim 5. The controlling of simulation may include generating an operating waveform that represents a variation in an operation of the steering wheel according to time, and comparing and displaying the waveform of operation with a preset target waveform by using the display unit.

The controlling of simulation may include generating an acceleration pedal waveform representing a variation in a degree that an acceleration pedal is pressed according to time, and comparing and displaying the waveform of acceleration pedal with a preset target waveform by using the display unit.

The controlling of simulation may include generating at least one of a visual, auditory, and tactile event displayed on the simulation driving screen to measure a brake operation reaction speed of the user.

### BRIEF DESCRIPTION OF THE DRAWINGS

These and/or other aspects will become apparent and more readily appreciated from the following description of the embodiments, taken in conjunction with the accompanying drawings of which:
FIG. 1 is a structural diagram illustrating a driving simulator apparatus according to an embodiment of the present invention;
FIG. 2 is a flowchart illustrating a driver rehabilitation training method according to an embodiment of the present invention; and
FIG. 3 is a graph showing a target waveform of a target tracking training.

### DETAILED DESCRIPTION

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those of ordinary skill in the art. Like numbers refer to like elements throughout.

The present invention will be described with reference to the accompanying drawings such that one of ordinary skill in the art to which the invention pertains may easily work the invention.

First, a driving simulator apparatus according to the present invention will be described.

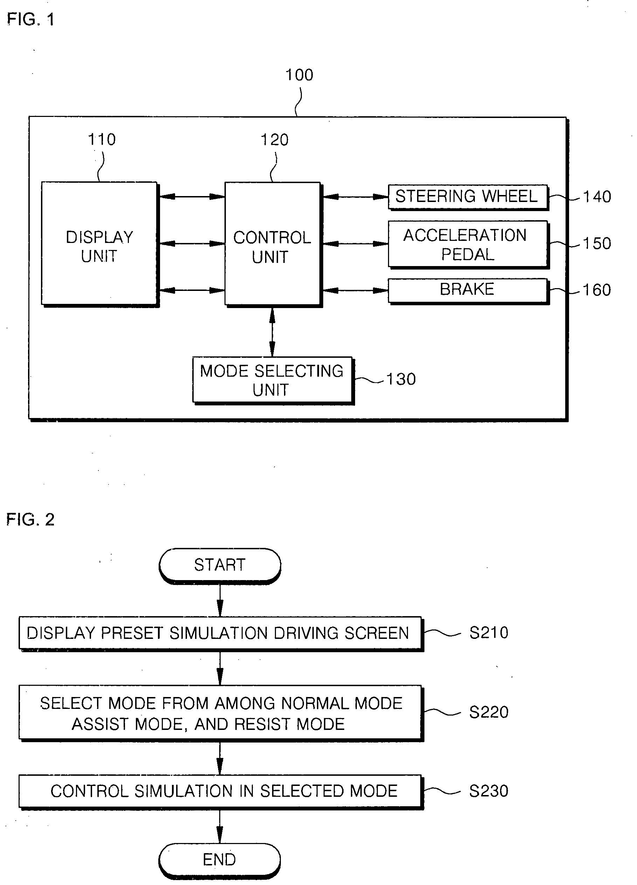

FIG. 1 is a structural diagram illustrating a driving simulator apparatus according to an embodiment of the present invention.

As illustrated in FIG. 1, the driving simulator apparatus according to the current embodiment of the present invention includes a display unit 110, a control unit 120, a mode selecting unit 130, a steering handle 140, an acceleration pedal 150, and a brake 160.

The display unit 110 displays a preset simulation driving screen. The display unit 110 may be formed of a combination of a screen and a projector or of a liquid crystal screen. The display unit 110 receives an image signal from the control unit 120 to display a preset simulation driving screen.

The control unit 120 controls the display unit 110 and an acoustic device (not shown). Thus, the control unit 120 transmits an image control signal or a sound control signal to the display unit 110 and the acoustic device, respectively. In addition, the control unit 120 controls driving simulation of a user in connection with operations of the steering wheel 140, the acceleration pedal 150, and the brake 160.

A user may select an operation control mode of the control unit 120 by using the mode selecting unit 130. The control mode includes a normal mode, an assist mode, and a resist mode.

In the normal mode, a steering wheel return and a force feedback under a normal driving condition are possible. Driving simulation for normal people who do not require rehabilitation training is possible in the normal mode.

The assist mode is for improving visual-motor coordination of the user with degraded physical or cognitive capability and corresponds to a force-position control mode in which a steering handle is moved to a position where a driver has to steer a vehicle during a target tracking training or a simulation driving training. The steering wheel return and the force feedback of the normal mode are also possible in the assist mode.

The resist mode is for improving visual-motor coordination of the user whose degraded physical or cognitive capability has recovered by training and corresponds to a reaction control mode in which reaction is applied in an opposite direction to the position where a driver has to steer a vehicle during a target tracking training or a simulation driving training. The steering handle return and the force feedback of the normal mode are also possible in the resist mode.

The user conducts driver rehabilitation training according to simulation images of the display unit 110 during driving simulation by using the steering handle 140.

In addition to the acceleration pedal 150, an auxiliary acceleration pedal (not shown) may be further included. The auxiliary acceleration pedal is mounted on a left brake for a left foot user. The user may selectively operate the acceleration pedal or the auxiliary acceleration pedal. The acceleration pedal and the auxiliary acceleration pedal are configured to have the same sensitivity and reaction. In addition, the two acceleration pedals may be connected via an instrumental link so as to use a common sensor and a common reaction system. The instrumental link has to be connected behind a brake shaft so as not to interfere with the brake 160 in the center.

The brake 160 stops or slows down a vehicle during driving simulation. For reaction speed training of the user with respect to the brake 160, a position of the brake 160 according to time after a point when an event is generated has to be measured.

Next, a driver rehabilitation training method by using a driving simulator apparatus according to the present invention will be described.

FIG. 2 is a flowchart illustrating a driver rehabilitation training method according to an embodiment of the present invention.

First, in operation S210, the display unit 110 displays a preset simulation driving screen. That is, the display unit 110 displays various image information needed for driving simulation. The image information includes, for example, road topography, a speed, revolutions per minute (RPM), a position, a distance, or a direction needed for driving.

In order for the display unit 110 to display a preset simulation driving screen, the display unit 110 receives an image signal from the control unit 120. The image signal includes a signal regarding a target waveform for target tracking training.

Next, the mode selecting unit 130 selects a mode from among a normal mode, an assist mode, and a resist mode.

A user may select from among the normal mode, the assist mode, and the resist mode according to the purpose of rehabilitation training. The mode selecting unit 130 may be formed of a touch screen on the display unit or a keypad or a button.

The normal mode, the assist mode, and the resist mode are described above, and here, control by the control unit 120 in each mode will be described below.

In operation S230, the control unit 120 controls simulation by using the simulator apparatus in a selected mode.

The assist mode is a control mode in which a driving force is applied in a rotational direction of a steering handle operated by the user. In the assist mode, in order to improve visual-motor coordination of the user with degraded physical or cognitive capability, the control unit 120 moves the steering wheel to a position to which a driver has to steer cursor point during a tracking training or a simulation driving training.

The resist mode corresponds to a control mode in which reaction is applied in an opposite direction to the rotational direction of the steering wheel operated by the user. In the resist mode, in order to improve visual-motor coordination of the user whose degraded physical or cognitive capability has recovered by training, the control unit 120 controls the steering wheel by applying reaction in an opposite direction to the direction where a driver has to steer cursor point during a target tracking training or simulation driving training.

As described above, as a user selects a mode according to a state of the user, rehabilitation training of the user may be effectively supported.

Hereinafter, rehabilitation training by using the steering wheel 140, the acceleration pedal 150, and the brake 160 will be described in detail.

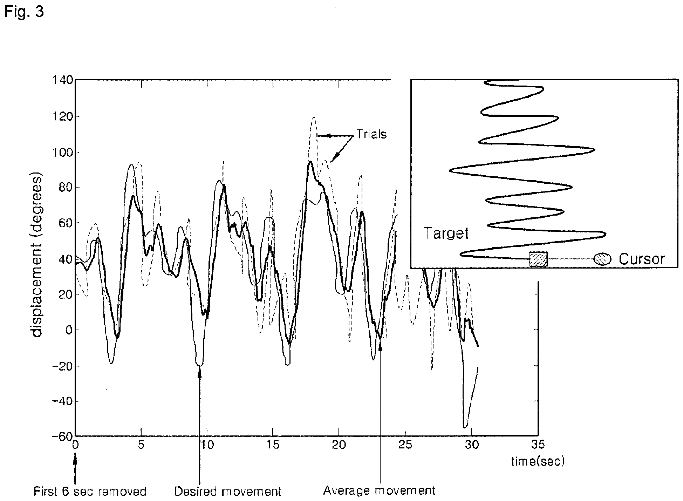

FIG. 3 is a graph showing a target waveform of a target tracking training.

First, steering wheel handle training will be described. The control unit 120 generates an operating waveform that represents a variation in an operation of the steering wheel 140 according to time. The display unit 110 compares the generated operating waveform with a preset target waveform and displays the same. The graph in a horizontal waveform of FIG. 3 shows comparison of a target waveform according to steering wheel handle training and the operating waveform of a driver.

Next, acceleration pedal training will be described. A target waveform according to acceleration pedal training, generated by the control unit 120, is displayed by using the display unit 110 as a longitudinal waveform as illustrated in FIG. 3, and a driver conducts target tracking training while adjusting a degree that the acceleration pedal is pressed. In FIG. 3, for accuracy, a section of the first six seconds is excluded from data processing. Desired movement denotes a target waveform, Average movement denotes an average waveform, and Trials denotes a training waveform of a user of driver rehabilitation.

Next, brake training will be described. As the control unit 120 transmits a signal, an event for requesting operation of a brake via an image (visual) by the display unit 110, via an acoustic device (not shown) (auditory), or via a shake of a steering handle (tactile) is generated. Here, the event is generated randomly. The driver here may brake as quickly as possible to conduct target tracking training (reaction speed training).

As described above, according to the current embodiment of the present invention, a driver with a degraded driving capability due to the aging or brain lesions may effectively practice driving. In particular, besides the normal mode, the assist mode and the resist mode are added to conduct target tracking training to thereby improve visual-motor coordination of the user, thereby recovering the driving capability of a patient, which has degraded due to physical and cognitive damages.

In addition, by configuring a program according to a state of the patient who needs driving rehabilitation, a recovery state of the patient according to continuous practicing may be estimated by comparing the same with an initial state of the patient. Also, the patient's fun or interests may be aroused so as to allow the patient to concentrate on practicing.

The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A driving simulator apparatus for driving rehabilitation training, the driving simulator apparatus comprising:
a display unit (110) for displaying a preset simulation driving screen;
a mode selecting unit (130) via which a normal mode, an assist mode, or a resist mode is selected by a user;
a steering wheel (140) operated by the user; and
a control unit (120) designed for controlling the display unit (110) and a driving simulation of the user in connection with operations of the steering wheel (140), **characterized in that** the control unit (120) is further designed for controlling
- to apply a driving force in a rotational direction of the steering wheel (140) operated by a user when the assist mode is selected, wherein the driving force acts for moving the steering wheel (140) to a position to which the user has to steer according to the driving simulation, and
- to apply a reaction force in an opposite direction to the rotational direction of the steering wheel (140) operated by the user when the resist mode is selected, wherein the reaction force acts for moving the steering wheel (140) in an opposite direction to the direction where the user has to steer according to the driving simulation.

2. The driving simulator apparatus of claim 1, wherein the control unit (120) generates an operating waveform that represents a variation in an operation of the steering wheel (140) according to time, and compares and displays the waveform of operation with a preset target waveform by using the display unit (110).

3. The driving simulator apparatus of claim 1, wherein the control unit (120) generates an acceleration pedal waveform representing a variation in a degree that an acceleration pedal (150) is pressed according to time, and compares and displays the waveform of acceleration pedal (150) with a preset target waveform by using the display unit (110).

4. The driving simulator apparatus of claim 1, wherein the control unit (120) generates at least one of a visual, auditory, and tactile event displayed on the simulation driving screen to measure a brake operation reaction speed of the user.

5. A driver rehabilitation training method by using a driving simulator apparatus, the driver rehabilitation training method comprising:
displaying a preset simulation driving screen by using a display unit (110);
selecting a control mode according to selection by a user from among a normal mode, an assist mode, and a resist mode;
operating a steering wheel (140) by the user; and
controlling the display unit (110) and a driving simulation of the user in connection with operations of the steering wheel (140),
**characterized in that** the simulation is controlled to apply a driving force in a rotational direction of the steering wheel (140) operated by the user when the assist mode is selected, wherein the driving force acts for moving the steering wheel (140) to a position to which the user has to steer according to the driving simulation, and
**in that** the simulation is controlled to apply a reaction force in an opposite direction to the rotational direction of the steering wheel (140) operated by the user when the resist mode is selected, wherein the reaction force acts for moving the steering wheel (140) in an opposite direction to the direction where the user has to steer according to the driving simulation.

6. The driver rehabilitation training method of claim 5, wherein the controlling of simulation comprises generating an operating waveform that represents a variation in an operation of the steering wheel (140) according to time, and compares and displays the waveform of operation with a preset target waveform by using the display unit (110).

7. The driver rehabilitation training method of claim 5, wherein the controlling of simulation comprises generating an acceleration pedal waveform representing a variation in a degree that an acceleration pedal (150) is pressed according to time, and compares and displays the waveform of acceleration pedal (150) with a preset target waveform by using the display unit (110).

8. The driver rehabilitation training method of claim 5, wherein the controlling of simulation comprises generating at least one of a visual, auditory, and tactile event displayed on the simulation driving screen to measure a brake operation reaction speed of the user.

## Patentansprüche

1. Fahrsimulatorvorrichtung für ein Fahrrehabilitationstraining, wobei die Fahrsimulatorvorrichtung umfasst:
eine Anzeigeeinheit (110) zum Anzeigen eines vorbestimmten Simulationsfahrbildschirms;
eine Modusauswahleinheit (130), mittels welcher durch einen Benutzer ein Normalmodus, ein Unterstützungsmodus oder ein Widerstandsmodus ausgewählt wird;
ein Lenkrad (140), das durch den Benutzer bedient wird; und
eine Steuereinheit (120), die dazu ausgebildet ist, die Anzeigeeinheit (110) und eine Fahrsimulation des Benutzers in Verbindung mit Bedienungen des Lenkrades (140) zu steuern,
**dadurch gekennzeichnet, dass** die Steuereinheit (120) ferner ausgebildet ist zum Steuern
- eines Ausübens einer Antriebskraft in einer Drehrichtung des durch einen Benutzer bedienten Lenkrades (140), wenn der Unterstützungsmodus ausgewählt ist, wobei die Antriebskraft dazu wirkt, das Lenkrad (140) zu einer Stellung zu bewegen, zu welcher der Benutzer gemäß der Fahrsimulation zu lenken hat, und
- eines Ausübens einer Gegenwirkungskraft in einer Richtung entgegengesetzt zu der Drehrichtung des durch den Benutzer bedienten Lenkrades (140), wenn der Widerstandsmodus ausgewählt ist, wobei die Gegenwirkungskraft dazu wirkt, das Lenkrad (140) in einer Richtung entgegengesetzt zu der Richtung zu bewegen, in welche der Benutzer gemäß der Fahrsimulation zu lenken hat.

2. Fahrsimulatorvorrichtung nach Anspruch 1, wobei die Steuereinheit (120) eine Bedienungswellenform erzeugt, die eine Variation in einer Bedienung des Lenkrades (140) entsprechend der Zeit darstellt, und ein Vergleichen und Anzeigen der Wellenform der Bedienung mit einer vorbestimmten Zielwellenform unter Verwendung der Anzeigeeinheit (110) vorsieht.

3. Fahrsimulatorvorrichtung nach Anspruch 1, wobei die Steuereinheit (120) eine Beschleunigungspedalwellenform erzeugt, die eine Variation eines Ausmaßes darstellt, mit dem ein Beschleunigungspedal (150) entsprechend der Zeit gedrückt wird, und ein Vergleichen und Anzeigen der Wellenform des Beschleunigungspedals (150) mit einer vorbestimmten Zielwellenform unter Verwendung der Anzeigeeinheit (110) vorsieht.

4. Fahrsimulatorvorrichtung nach Anspruch 1, wobei die Steuereinheit (120) wenigstens eines von einem visuellen, auditiven und taktilen Ereignis, dargestellt auf dem Simulationsfahrbildschirm, erzeugt, um eine Bremsbetätigung-Reaktionsgeschwindigkeit des Benutzers zu messen.

5. Verfahren für ein Fahrerrehabilitationstraining unter Verwendung einer Fahrsimulatorvorrichtung, wobei das Verfahren für das Fahrerrehabilitationstraining umfasst:
Anzeigen eines vorbestimmten Simulationsfahrbildschirms unter Verwendung einer Anzeigeeinheit (110);
Auswählen eines Steuermodus entsprechend einer Auswahl durch einen Benutzer aus einem Normalmodus, einem Unterstützungsmodus und einem Widerstandsmodus;
Bedienen eines Lenkrades (140) durch den Benutzer; und
Steuern der Anzeigeeinheit (110) und einer Fahrsimulation des Benutzers in Verbindung mit Bedienungen des Lenkrades (140),
**dadurch gekennzeichnet, dass** die Simulation gesteuert wird zum Ausüben einer Antriebskraft in einer Drehrichtung des durch den Benutzer bedienten Lenkrades (140), wenn der Unterstützungsmodus ausgewählt ist, wobei die Antriebskraft zum Bewegen des Lenkrades (140) zu einer Stellung wirkt, zu welcher der Benutzer gemäß der Fahrsimulation zu lenken hat, und
dass die Simulation gesteuert wird zum Ausüben einer Gegenwirkungskraft in einer Richtung entgegengesetzt zu der Drehrichtung des durch den Benutzer bedienten Lenkrades (140), wenn der Widerstandsmodus ausgewählt ist, wobei die Gegenwirkungskraft zum Bewegen des Lenkrades (140) in eine Richtung entgegengesetzt zu der Richtung wirkt, in welche der Benutzer gemäß der Fahrsimulation zu lenken hat.

6. Verfahren für ein Fahrerrehabilitationstraining nach Anspruch 5, wobei das Steuern der Simulation ein Erzeugen einer Bedienungswellenform umfasst, die eine Variation in einer Bedienung des Lenkrades (140) entsprechend der Zeit darstellt, und ein Vergleichen und Anzeigen der Wellenform der Bedienung mit einer vorbestimmten Zielwellenform unter Verwendung der Anzeigeeinheit (110) vorsieht.

7. Verfahren für ein Fahrerrehabilitationstraining nach Anspruch 5, wobei das Steuern der Simulation ein Erzeugen einer Beschleunigungspedalwellenform umfasst, die eine Variation eines Ausmaßes darstellt, mit dem ein Beschleunigungspedal (150) entsprechend der Zeit gedrückt wird, und ein Vergleichen und Anzeigen der Wellenform des Beschleunigungspedals (150) mit einer vorbestimmten Zielwellenform unter Verwendung der Anzeigeeinheit (110) vorsieht.

8. Verfahren für ein Fahrerrehabilitationstraining nach Anspruch 5, wobei das Steuern der Simulation ein Erzeugen wenigstens eines von einem visuellen, akustischen und taktilen Ereignis, angezeigt auf dem Simulationsfahrbildschirm, umfasst, um eine Bremsbetätigung-Reaktionsgeschwindigkeit des Benutzers zu messen.

## Revendications

1. Appareil de simulation de conduite pour un entraînement de réhabilitation de conduite, l'appareil de simulation de conduite comprenant :
une unité d'affichage (110) pour afficher un écran de simulation de conduite préétabli ;
une unité de sélection de mode (130) via laquelle un mode normal, un mode d'assistance ou un mode de résistance est sélectionné par un utilisateur ;
un volant (140) actionné par l'utilisateur ; et
une unité de commande (120) conçue pour commander l'unité d'affichage (110) et une simulation de conduite de l'utilisateur en fonction d'actionnements du volant (140),
**caractérisé en ce que** l'unité de commande (120) est en outre conçue pour commander
- l'application d'une force de conduite dans une direction de rotation du volant (140) actionné par un utilisateur quand le mode d'assistance est sélectionné, dans lequel la force de conduite agit pour déplacer le volant (140) jusqu'à une position vers laquelle l'utilisateur doit conduire conformément à la simulation de conduite, et
- l'application d'une force de réaction en direction opposée à la direction de rotation du volant (140) actionné par l'utilisateur quand le mode de résistance est sélectionné, dans lequel la force de réaction agit pour déplacer le volant (140) dans une direction opposée à la direction dans laquelle l'utilisateur doit conduire conformément à la simulation de conduite.

2. Appareil de simulation de conduite selon la revendication 1, dans lequel l'unité de commande (120) génère une forme d'onde d'actionnement qui représente une variation d'actionnement du volant (140) en fonction du temps, et compare et affiche la forme d'onde de l'actionnement avec une forme d'onde cible préétablie en utilisant l'unité d'affichage (110).

3. Appareil de simulation de conduite selon la revendication 1, dans lequel l'unité de commande (120) génère une forme d'onde de pédale d'accélération représentant une variation d'un degré d'actionnement d'une pédale d'accélération (150) en fonction du temps, et compare et affiche la forme d'onde de la pédale d'accélération (150) avec une forme d'onde cible préétablie en utilisant l'unité d'affichage (110).

4. Appareil de simulation de conduite selon la revendication 1, dans lequel l'unité de commande (120) génère au moins un événement parmi un événement visuel, un événement auditif et un événement tactile affiché sur l'écran de simulation de conduite pour mesurer une vitesse de réaction d'actionnement du frein par l'utilisateur.

5. Procédé d'entraînement pour la réhabilitation d'un conducteur utilisant un appareil de simulation de conduite, le procédé d'entraînement pour la réhabilitation d'un conducteur comprenant :
l'affichage d'un écran de simulation de conduite préétabli en utilisant une unité d'affichage (110) ;
la sélection d'un mode de commande en fonction d'une sélection par un utilisateur parmi un mode normal, un mode d'assistance et un mode de résistance ;
l'actionnement d'un volant (140) par l'utilisateur ; et
la commande de l'unité d'affichage (110) et d'une simulation de conduite de l'utilisateur en fonction d'actionnements du volant (140),
**caractérisé en ce que** la simulation est commandée pour appliquer une force de conduite dans une direction de rotation du volant (140) actionné par l'utilisateur quand le mode d'assistance est sélectionné, dans lequel la force de conduite agit pour déplacer le volant (140) jusqu'à une position vers laquelle l'utilisateur doit conduire conformément à la simulation de conduite, et
**en ce que** la simulation est commandée pour appliquer une force de réaction en direction opposée à la direction de rotation du volant (140) actionné par l'utilisateur quand le mode de résistance est sélectionné, dans lequel la force de réaction agit pour déplacer le volant (140) dans une direction opposée à la direction dans laquelle l'utilisateur doit conduire conformément à la simulation de conduite.

6. Procédé d'entraînement pour la réhabilitation d'un conducteur selon la revendication 5, dans lequel la commande de la simulation comprend la génération d'une forme d'onde d'actionnement qui représente une variation d'actionnement du volant (140) en fonction du temps, et la comparaison et l'affichage de la forme d'onde de l'actionnement avec une forme d'onde cible préétablie en utilisant l'unité d'affichage (110).

7. Procédé d'entraînement pour la réhabilitation d'un conducteur selon la revendication 5, dans lequel la commande de simulation comprend la génération d'une forme d'onde de pédale d'accélération représentant une variation d'un degré d'actionnement d'une pédale d'accélération (150) en fonction du temps, et la comparaison et l'affichage de la forme d'onde de la pédale d'accélération (150) avec une forme d'onde cible préétablie en utilisant l'unité d'affichage (110).

8. Procédé d'entraînement pour la réhabilitation d'un conducteur selon la revendication 5, dans lequel la commande de simulation comprend la génération d'au moins un événement parmi un événement visuel, un événement auditif et un événement tactile affiché sur l'écran de simulation de conduite pour mesurer une vitesse de réaction d'actionnement du frein par l'utilisateur.
